# EUROPÄISCHE PATENTANMELDUNG

(11) **EP 4 807 697 A1**
(43) Veröffentlichungstag der Anmeldung: **16.09.2026**
(21) Anmeldenummer: 26162807.7
(22) Anmeldetag: 06.03.2026
(51) Int. Cl.: G06V 20/58, B61L 15/00, B61L 23/04, B61L 27/60

(54) **VERFAHREN UND ANORDNUNG ZUM BETREIBEN EINER KI/ML-BASIERTEN HINDERNISERKENNUNG EINES FAHRZEUGS, INSBESONDERE KRAFT- ODER SCHIENENFAHRZEUGS**

(30) Priorität: 13.03.2025 DE 102025109694
(71) Anmelder: Siemens Aktiengesellschaft, 80333 München (DE)
(72) Erfinder: Telschig, Kilian, 85748 Garching (DE); Zeller, Marc, 80997 München (DE)
(74) Vertreter: Siemens Patent Attorneys

(57) **Zusammenfassung**

Die Erfindung betrifft ein Verfahren zum Betreiben einer KI/ML-basierten Hinderniserkennung eines Fahrzeugs, insbesondere Kraft- oder Schienenfahrzeugs, bei dem die Hinderniserkennung des Fahrzeugs derart betrieben wird, dass sie Hindernisse aufgrund zumindest eines ersten Ausgangssignals basierend auf zumindest einem auf dem Fahrzeug betriebenen ersten KI/ML-Modell vorhersagt und für einen Betrieb des Fahrzeugs berücksichtigt wird, wobei durch das erste KI/ML-Modell aufgrund von zumindest einem Eingangssignal das erste Ausgangssignal erzeugt wird, das Grundlage für die erste Vorhersage bildet, bei der
a) auf dem Fahrzeug zumindest ein zweites KI/ML-Modell derart parallel zum ersten KI/ML-Modell installiert und betrieben wird, dass ihm das Eingangssignal zugeführt wird und es zumindest ein zweites Ausgangssignal basierend auf dem zweiten KI/ML-Modell erzeugt, das Grundlage für eine zweite Vorhersage ist, die durch die Hinderniserkennung derart verarbeitet wird, dass es für den Betrieb des Fahrzeugs unberücksichtigt bleibt,
b) zumindest bis zum Erreichen einer Abbruchbedingung, ein Vergleich mit zumindest einem Teil der ersten Vorhersagen und mit zumindest einem Teil der zweite Vorhersagen erfolgt,
c) eine Erfassung der ersten und oder zweiten Vorhersage derart erfolgt, dass zumindest ein Freigabekriterium ermittelbar wird,
d) bei Vorlage der Abbruchbedingung die Überprüfung des Freigabekriteriums derart erfolgt, dass für den Fall, dass das Freigabekriterium erfüllt ist, die zweite Vorhersage für den Betrieb des Fahrzeugs zumindest temporär berücksichtigt wird und die erste Vorhersage zumindest temporär für den Betrieb des Fahrzeugs unberücksichtigt bleibt. Ferner betrifft die Erfindung eine Anordnung mit Mitteln zur Durchführung des Verfahrens.

## Beschreibung

Die Erfindung betrifft ein Verfahren zum Betreiben einer KI/ML-basierten Hinderniserkennung eines Fahrzeugs, insbesondere Kraft- oder Schienenfahrzeugs, gemäß dem Oberbegriff des Anspruchs 1 sowie eine Anordnung zum Betreiben einer KI/ML-basierten Hinderniserkennung eines Fahrzeugs, insbesondere Kraft- oder Schienenfahrzeugs, gemäß Oberbegriff des Anspruchs 16.

Es ist bekannt das Systeme, die ganz oder teilweise durch Komponenten realisiert sind, welche als so genannte Künstliche Intelligenz (Kl), auch als "Artifical Intelligence" (AI) bekannt, oder auf so genanntem Maschinellen Lernen (ML), auch als "Machine Learning", bezeichnet, beruhen, häufiger aktualisiert werden als herkömmliche Systeme.

Dies liegt in der Regel darin begründet, dass solche Komponenten in der Regel weiter trainiert werden, nicht zuletzt auch basierend auf den Rückmeldungen im Einsatz, die zur Verbesserung der KI/ML Komponenten führen. Dies ist insbesondere bei sicherheitsrelevanten Systemen von Vorteil. Bei solchen Einsatzgebieten ist es wünschenswert, dass die Verbesserungen schnell zum Einsatz kommen.

Allerdings ist es so, dass für den Fall, dass die KI/ML Komponenten, sicherheitsrelevante Funktionen ausüben, beispielsweise die Hinderniserkennung in einem, insbesondere fahrerlosen, Zug, eine aufwendige Verifikation und Validierung vor dem Deployment eines KI/ML Modells notwendig ist.

Die in den KI/ML eingesetzten Modelle werden also nicht nur trainiert, sondern auch vor dem Deployment verifiziert, getestet und validiert. Verifikation/Test und Validierung werden dabei in einer Test-Umgebung durchgeführt. Zudem wird in der Regel ein Zulassungsprozess durchlaufen und nach erfolgreicher Begutachtung kann erst die neue Version eines KI/ML Modells "deployed", also eingesetzt, werden. Dies kann sehr viel Zeit in Anspruch nehmen und steht im Widerspruch dazu, dass Verbesserungen schnell in Betrieb ausgerollt werden sollen.

Die der Erfindung zugrundeliegende Aufgabe ist es daher eine Lösung anzugeben, die die Nachteile des Standes der Technik überwindet, insbesondere ist es die Aufgabe der Erfindung eine technische Lösung anzugeben, die ein Verfahren zum Betreiben einer KI/ML basierten Hinderniserkennung in einem Fahrzeug, insbesondere Kraft- oder Schienenfahrzeug, mit einer zeitsparenden und akkuraten Aktualisierung ermöglicht.

Diese Aufgabe wird ausgehend von dem Verfahren und Anordnung zum Betreiben einer KI/ML-basierten Hinderniserkennung eines Fahrzeugs, insbesondere Kraft- oder Schienenfahrzeugs, gemäß dem Oberbegriff des Anspruchs 1, durch dessen kennzeichnende Merkmale, sowie ausgehend von der Anordnung zum Betreiben einer KI/ML-basierten Hinderniserkennung eines Schienenfahrzeugs, insbesondere Zuges, gemäß Oberbegriff des Anspruch 16, durch dessen kennzeichnende Merkmale gelöst.

Bei dem erfindungsgemäßen Verfahren zum Betreiben einer KI/ML-basierten Hinderniserkennung eines Fahrzeugs, insbesondere Kraft- oder Schienenfahrzeugs, bei dem die Hinderniserkennung des Fahrzeugs derart betrieben wird, dass sie Hindernisse aufgrund zumindest eines ersten Ausgangssignals basierend auf zumindest einem auf dem Fahrzeug betriebenen ersten KI/ML-Modell vorhersagt und für einen Betrieb des Fahrzeugs berücksichtigt wird, wobei durch das erste KI/ML-Modell aufgrund von zumindest einem Eingangssignal das erste Ausgangssignal erzeugt wird, das Grundlage für die erste Vorhersage bildet,
a) wird auf dem Fahrzeug zumindest ein zweites KI/ML-Modell derart parallel zum ersten KI/ML-Modell installiert und betrieben, dass ihm das Eingangssignal zugeführt wird und es zumindest ein zweites Ausgangssignal basierend auf dem zweiten KI/ML-Modell erzeugt, das Grundlage für eine zweite Vorhersage ist, die durch die Hinderniserkennung derart verarbeitet wird, dass es für den Betrieb des Fahrzeugs unberücksichtigt bleibt,
b) erfolgt zumindest bis zum Erreichen einer Abbruchbedingung, ein Vergleich mit zumindest einem Teil der ersten Vorhersagen und mit zumindest einem Teil der zweite Vorhersagen,
c) erfolgt eine Erfassung der ersten und oder zweiten Vorhersage derart, dass zumindest ein Freigabekriterium ermittelbar wird,
d) erfolgt bei Vorlage der Abbruchbedingung die Überprüfung des Freigabekriteriums derart, dass für den Fall, dass das Freigabekriterium erfüllt ist, die zweite Vorhersage für den Betrieb des Schienenfahrzeugs zumindest temporär berücksichtigt wird und die erste Vorhersage zumindest temporär für den Betrieb des Fahrzeugs unberücksichtigt bleibt. Durch das erfindungsgemäße Verfahren wird es möglich, dass ein neues Modell in einem Schattenmodus auf dem Fahrzeug betrieben und bis zumindest zum Vorliegen der Abbruchbedingung getestet werden, ohne mit negativen Folgen der Implementierung des neuen Modells rechnen zu müssen. Bei der Abbruchbedingung handelt es sich um eine oder mehrere Größen, die eine ausreichende Testung gewährleisten. Welche konkreten Werte das sind, lässt sich dabei insbesondere durch Optimierungsrechnungen, Einsatz von Simulation, Einsatz eins Digitalen Zwillings und/oder in einem so genannten "Trial and Error"-Verfahren bestimmen. Es kann sich bei der Abbruchbedingung also beispielsweise um das Erreichen einer bestimmten Betriebsdauer und/oder einer bestimmten Streckenabdeckung, insbesondere eine Dauer oder Streckenabdeckung bei der angenommen werden kann, dass ausreichend Vorhersagen von Hindernissen bzw. ausbleibende Vorhersagen des ersten Modells vorliegen, wobei diese erfasst werden, so dass bei Erreichen der Abbruchbedingung ein Freigabekriterium anhand der ersten und zweiten Vorhersagen erfolgen kann. Also dass für eine Freigabe eine Bewertung auf Grundlage zumindest der ersten Vorhersagen und der zweiten Vorhersagen erfolgt. Das Kriterium kann dabei vergleichbar mit der Abbruchbedingung durch Optimierungsrechnungen, Simulation, Digitalem Zwilling oder weiteren Verfahren so determiniert, dass das Erreichen zumindest einer beispielsweise, insbesondere durch priorisierte Sicherheitserwägungen, Performance- und/oder Ressourcennutzung gegebenen, als hoch priorisiert eingestuften Eigenschaft überprüft wird und wenn dies der Fall ist, das neue Modell auf dem Schienenfahrzeug, scharf geschalten wird, die Hinderniserkennung nun also auf dem neuen Modell beruht. Dass dies erfindungsgemäß zumindest temporär erfolgt, bedeutet, dass insbesondere abhängig von dem zugrundeliegenden Freigabekriterium, erfindungsgemäß auch vorgesehen sein kann, dass nach dem Scharfschalten weitere Tests und/oder Klassifizierungen erfolgen, die dabei helfen, die Zuverlässigkeit des neuen Modells ausführlicher zu testen. Hierdurch werden neue Vergleichswerte für zukünftige Modellupdates und/oder Trainingsdaten zur Erzeugung derselben gefunden. Dieser Ansatz erlaubt aber grundsätzlich auch flexiblere Weiterbildungen, beispielsweise welche, die ein Zurückspringen in das Vorgängermodell erlauben, wenn sich schwere Fehler nach der Freigabe ergeben sollten. Die erfindungsgemäße Anordnung zum Betreiben einer KI/ML-basierten Hinderniserkennung eines Schienenfahrzeugs gemäß dem Verfahren nach einem der vorhergehenden Ansprüche ist durch Mittel zur Durchführung des Verfahrens und/oder einer seiner Weiterbildungen gekennzeichnet.

Durch die erfindungsgemäßen Anordnungen wird die Implementierung des Verfahrens strukturell realisiert und somit zur Umsetzung der Vorteile des Verfahrens und/oder seiner Weiterbildungen beigetragen.

Weitere vorteilhafte Ausgestaltungen und Weiterbildungen der Erfindung sind durch die Unteransprüche angegeben.

Sofern es in der Beschreibung zur Erfindung und ihren Weiterbildungen nicht anders angegeben ist, beziehen sich die Begriffe "durchführen", "umsetzen", "transformieren", "übertragen", "berechnen", "rechnergestützt", "rechnen", "feststellen", "generieren", "konfigurieren", "rekonstruieren", "ermitteln", "erfassen" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" bzw. "Rechner" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikations-geräte, die rechnergestützt Daten verarbeiten können, Prozessoren und andere elektronische Geräte zur Datenverarbeitung sein.

Unter "rechnergestützt" oder "computergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit", "Speichereinrichtung" oder einem "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger sowie eine Kombination aus einer oder mehreren dieser Elemente zur Bildung einer so genannten Cloud verstanden werden.

Unter einem "Modul" kann im Zusammenhang mit der Erfindung beispielsweise mindestens ein Prozessor und/oder mindestens eine Speichereinheit zum Speichern von Programmbefehlen verstanden werden, welche physisch an einem Ort, beispielsweise einem Teil einer Leiterplatte, funktional zusammenwirkend verbunden sind. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren.

Bei einer Weiterbildung des erfindungsgemäßen Verfahrens wird zur Ermittlung des Freigabekriteriums das Vorhandensein und/oder Eigenschaften vorhergesagter Hindernisse des zweiten Kl-Modells und das Vorhandensein und/oder Eigenschaften vorhergesagter Hindernisse des ersten KI-Modells verifiziert und eine quantitative und/oder qualitative erste Klassifizierung durchgeführt und strukturiert gespeichert.

Hierdurch wird beispielsweise die Freigabe auf eine Grundlage gestellt, bei der die positiven Vorhersagen des ersten, also alten, Modells und des zweiten, also neuen Modells, ermittelt werden und ob diese korrekt sind. Es kann also somit auch für jedes Hindernis, dass das neue Modell vorhersagt, bestimmt werden, ob dieses Hindernis auch durch das alte Modell vorhergesagt wurde, so dass ein direkter Vergleich möglich ist. Denkbar ist also eine Klassifizierung derart, ob die Vorhersagen von Hindernissen korrekt waren und welche das waren. Durch die Speicherung ist dies auch zu späteren Zeiten abrufbar, wobei die Strukturierung unter anderem eine Zuordnung bereitstellt, die die Auswertung erleichtert, insbesondere schneller ermöglicht. Beispielsweise wird hierdurch möglich zu prüfen, ob das neue Modell mindestens die gleichen Hindernisse vorhersagt, wie das alte Modell und somit die Menge der durch das neue Modell vorhergesagten Hindernisse also die Menge der durch das alte Modell vorhergesagten Hindernisse umfasst, mithin also eine Obermenge darstellt.

Diese Ergebnisse können dann beispielsweise vorteilhaft bei der Weiterbildung des erfindungsgemäßen Verfahrens genutzt werden, bei dem die erste Klassifizierung derart erfolgt, dass zumindest erste Vorhersagen und/oder zweite Vorhersagen ermittelt werden, die ein Hindernis vorhergesagt haben und die Verifikation, derart erfolgt, dass eine Diskriminierung durchgeführt wird, ob die jeweilige Vorhersage korrekt war oder nicht, und/oder, dass eine jeweilige ausbleibende Vorhersage korrekt war oder nicht. Diese Weiterbildung ermittelt also nicht nur die richtige Vorhersage von Hindernissen, sondern auch richtiges Ausbleiben von Vorhersagen von Hindernissen, die auch als negative Vorhersagen betrachtet und/oder ausgestaltet sein können. Damit lässt sich eine Klassifizierung von falsch positiven/negativen Vorhersagen und wahr positiven/negativen Vorhersagen umsetzen.

Eine weitere vorteilhafte Weiterbildung des erfindungsgemäßen Verfahrens ist gegeben, wenn das Freigabekriterium als erfüllt gesetzt wird, wenn die Klassifizierung ergibt, dass zumindest die von korrekten zweiten Vorhersagen gebildete Menge gleich der von korrekten ersten Vorhersagen gebildeten Menge ist. Durch diese Weiterbildung wird erreicht, dass eine Freigabe dann erfolgt, wenn zumindest die gleiche Menge von Hindernissen erkannt werden, seitens des neuen Modells, wie seitens des alten Modells. Dies berücksichtigt - ebenso wie die folgende Weiterbildung - die Tatsache, dass Modellupdates in der Regel nicht nur die Vorhersagen verbessern, sondern auch weitere Verbesserungen bringen können, wie bessere Stabilität, Ressourcennutzung, Performance oder anderer Verbesserungen von Systemparametern. Gemeinsam mit der Tatsache, dass zumindest die gleichen Hindernisse erkannt werden, ist also insgesamt sicherheitstechnisch eine Mindestanforderung als auch systemtechnisch eine Verbesserung gegeben, so dass es Sinn macht, das Modell scharf zu schalten., wenn wenigstens die Mengen der positiven Vorhersagen übereinstimmen - oder gemäß folgender Weiterbildung die durch korrekten positiven Vorhersagen des neuen Modells gebildete Menge sogar darüber hinausgeht, also die Obermenge bildet. - Insbesondere in so einem Fall ist eine temporäre Freischaltung bei der weiter getestet wird, wie es bereits angesprochen wurde, vorteilhaft. Beispielsweise um zu bewerten, ob die erkannten Hindernisse den gleichen Sicherheitsbonus bringen wie beim alten Modell.

Alternativ oder ergänzend kann das erfindungsgemäße Verfahren derart weitergebildet werden, dass das Freigabekriterium als erfüllt gesetzt wird, wenn die erste Klassifizierung ergibt, dass zumindest die von korrekten zweiten Vorhersagen gebildete Menge größer oder gleich der von korrekten ersten Vorhersagen gebildeten Menge ist, so dass die Menge der durch das neue Modell korrekt erkannten Hindernisse also eine Obermenge zur Menge der durch das alte Modell korrekt erkannten Hindernisse darstellt bzw. die durch das alte Modell korrekt erkannten Hindernisse eine Teilmenge der durch das alte Modell korrekt erkannten Hindernisse darstellt.

Alternativ oder ergänzend kann das erfindungsgemäße Verfahren auch derart weitergebildet werden, dass das Freigabekriterium als erfüllt gilt, wenn die Klassifizierung ergibt, dass die durch korrekt ausbleibende zweite Vorhersagen gebildete Menge im Vergleich zu der durch korrekt ausbleibende erste Vorhersagen gebildete Menge eine Obermenge bildet. Dies berücksichtigt auch die negativen Vorhersagen, also ob korrekt war, dass es kein Hindernis gab. Falsche Vorhersagen sind zwar sicherheitstechnisch weniger bedenklich, da dann lediglich gewissermaßen übervorsichtig betrieben wird, sie können aber zu Ablenkungen des Zugführers führen und/oder den Betrieb stören, so dass diese Weiterbildung für eine Verbesserung der Qualität und/oder Sicherheit eines freigegebenen Modells sorgen kann.

Wird das erfindungsgemäße Verfahren derart weitergebildet, dass für erste Vorhersagen und/oder ausbleibende erste Vorhersagen, die sie von den zweiten Vorhersagen und/oder ausbleibenden zweiten Vorhersagen unterscheiden eine zweite Klassifizierung durchgeführt wird, können sich vom alten Modell unterscheidende positive Vorhersagen oder unterscheidende negative Vorhersagen (ausbleibende Vorhersagen) einer Bewertung zugeführt werden, die beispielsweise zu einer Freigabe führen kann, selbst, wenn die positiven und/oder negativen zweiten Vorhersagen quantitativ geringer sind.

Dabei ist es vorteilhaft, wenn das erfindungsgemäße Verfahren derart weitergebildet wird, dass ein Klassifizierungsprozess zur Durchführung der zweiten Klassifizierung zur zweiten Vorhersage derart erfolgt, dass er aufgrund während Betriebsphasen des Fahrzeugs erfasster mit dem Betrieb korrelierender Ereignisse durchgeführt wird. Hierdurch werden also Betriebsparameter direkt zur Klassifizierung herangezogen, so dass für (ausbleibende) Vorhersagen, die es beim alten Modell nicht gab, aufgrund der Betriebsparameter bestimmt werden kann, ob diese (ausbleibenden) Vorhersagen qualitativ hochwertig, mindestens jedoch, zutreffend sind.

Wird das erfindungsgemäße Verfahren derart weitergebildet, dass sein Klassifizierungsprozess zur zweiten Vorhersage derart erfolgt, dass er nach Betriebsphasen des Fahrzeugs durchgeführt wird, wobei dies aufgrund von zumindest Teilen von strukturiert gespeicherter, während der Betriebsphasen, insbesondere zu diskreten Zeitpunkten, erfasster mit dem Betrieb korrelierender Ereignisse erfolgt, kann sichergestellt werden, dass der laufende Betrieb möglichst wenig durch die Klassifizierungsprozedur gestört wird.

Dabei kann das erfindungsgemäße Verfahren derart vorteilhaft weitergebildet werden, dass die Klassifizierung gestützt auf ein drittes Kl-Modell zur Hinderniserkennung durchgeführt wird, welches insbesondere auf eine Korrelation mit den im Betrieb auftretenden Ereignissen trainiert ist.. Hiermit wird also eine Automatisierung erreicht, die das Klassifizieren auch schneller macht.

Alternativ oder ergänzend kann das erfindungsgemäße Verfahren derart weitergebildet werden, dass für den Klassifizierungsprozess die zweite Klassifizierung durch Erfassung von Fahrführerrückmeldungen durchgeführt wird. Hierdurch kann entweder das dritte Kl-Modell unterstützt werden und/oder es wird eine von einem Modell unabhängige Lösung bereitgestellt.

Bei einer weiteren Weiterbildung des erfindungsgemäßen Verfahren erfolgt die Erfassung mit dem Betrieb korrelierender Ereignisse derart, dass bei Annäherung an ein gemäß zweiter Vorhersage prognostiziertes Ort eines Hindernisses oder an ein tatsächliches Hindernis die Auswertung von zumindest einem, insbesondere auf Grundlage von ersten Sensoren, erfassten, Betriebsparameter, wie Beispielsweise Einleitung einer Bremsung, Geschwindigkeitsparameter, wie beispielweise Verlangsamung, Beschleunigung oder Konstanthalten, und/oder von zweiten Sensoren, wie Lidar, Radar und vergleichbare Umgebungsbeobachtungseinrichtungen, erfassten Umgebungsparameter erfolgt. Hierdurch wird eine Ereigniserfassung erreicht, die akkurate Bewertungen ermöglicht.

Gemäß einer weiteren Weiterbildung des erfindungsgemäßen Verfahrens wird für zumindest einen Teil der ersten Vorhersagen und zumindest einen Teil der zweiten Vorhersagen jeweils ein Zeitstempel zugeordnet und der Teil der ersten Vorhersagen und der Teil der zweiten Vorhersagen mit dem jeweiligen Zeitstempel derart strukturiert abgespeichert, dass erste und zweite Vorhersagen des gleichen Zeitstempels zum Vergleich auslesbar hinterlegt sind. Hierdurch ist beispielswiese möglich zu erkennen, ob erste und zweite (ausbleibende) Vorhersagen übereinstimmen, da eine Zuordnung über die Zeit möglich wird.

Dies wird weiter verbessert, wenn das erfindungsgemäße Verfahren derart weitergebildet wird, dass der erste Teil und der zweite Teil derart strukturiert abgespeichert werden, dass zugeordnet zu dem jeweiligen Zeitstempel, die, insbesondere von den ersten Sensoren erfassten, Betriebsparameter und die, insbesondere von den zweiten Sensoren erfassten, Umgebungsparameter, gemeinsam mit der ersten Vorhersage und/oder zweiten Vorhersage gemeinsam auslesbar hinterlegt ist.

Vorzugsweise wird das erfindungsgemäße Verfahren derart weitergebildet, dass die zweiten Klassifizierung derart erfolgt, dass der Vergleich der ersten Vorhersage und der zweiten Vorhersage dem Zugführer und/oder dem Dritten Kl-Modell zeitlich, insbesondere kurz nach, Erfassen eines mit dem Betrieb korrelierender Ereignisses und/oder nach der Betriebsphase durch Auslesen der strukturierten Speicherung vorgelegt wird, die Rückmeldung des Fahrzeugführers und/oder des dritten Kl-Modells als zu diesem Vergleich zugehörige Klassifizierung strukturiert abgespeichert wird.

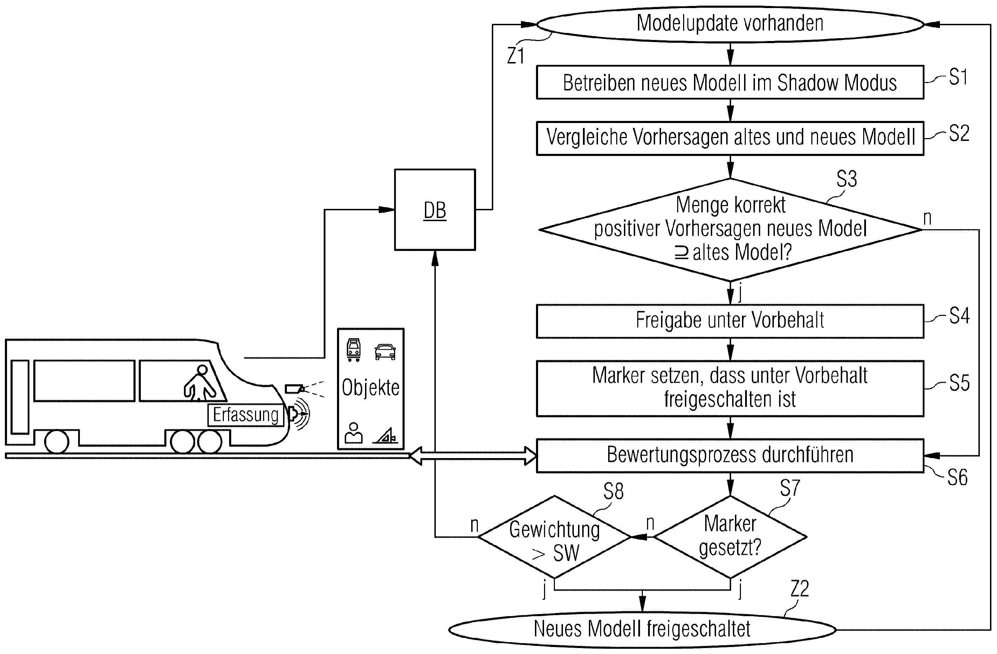

Im Folgenden werden weitere Vorteile und Details der Erfindung sowie Weiterbildungen der Erfindung anhand eines in der einzigen Figur dargestellten Ausführungsbeispiels näher erläutert. Es zeigt die
- Figur (FIG): schematisch einen beispielhaften Ablauf des Verfahrens.

Bei dem im Folgenden in der Figur (FIG) erläuterten Ausführungsbeispiel handelt es sich um eine bevorzugte Ausführungsform anhand dessen Vorteile sowie weiteren Ausführungsformen bzw. Weiterbildungen der Erfindung näher erläutert werden.

Insbesondere zeigen die nachfolgenden Erläuterungen lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

Auch sind insbesondere einem (einschlägigen) Fachmann in Kenntnis der unabhängigen Ansprüche alle im Stand der Technik üblichen Möglichkeiten zur Realisierung der Erfindung selbstverständlich bekannt, sodass es insbesondere einer eigenständigen Offenbarung in der Beschreibung nicht bedarf.

Bei dem Ausführungsbeispiel bzw. den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind.

Des Weiteren sind die beschriebenen Ausführungsformen auch durch weitere der bereits beschriebenen Merkmale der Erfindung ergänzbar.

In der einzigen Figur FIG ist nun schematisch als Ausführungsbeispiel des erfindungsgemäßen Verfahrens die Implementierung des erfindungsgemäßen Verfahrens anhand eines Ablaufplans im Zusammenspiel mit einem Schienenfahrzeug dargestellt. Zu erkennen ist ein Schienenfahrzeug, insbesondere ein Zug, welches eine Zielplattform mit einer Hinderniserkennung basierend auf einer Komponente umfasst, die ein oder mehrere KI/ML-Modelle zur Vorhersage von möglichen erkannten Hindernissen betreibt, zu denen schematisch eine Auswahl dargestellt ist.

Des Weiteren ist ein schematischer Ablauf des Ausführungsbeispiels des erfindungsgemäßen Verfahrens zu erkennen, welches auf den Zug wirkt, insbesondere computergestützt durchgeführt wird, insbesondere zumindest teilweise computerimplementiert ist, und. zumindest teilweise mit Sensoren und Ein- oder Ausgabesignale erzeugenden Komponenten zusammenwirkt, um die Aktualisierung der für die Hinderniserkennung implementierte Komponente, im vorliegenden Beispiel sei dies ein KI/ML-Modell KI/ML1, in der gemäß der Erfindung gelehrten Art zu ermöglichen.

Hierzu wird ausgehend von einem ersten Zustand Z1 Modellupdate in einem ersten Schritt S1 eine neue Version des KI/ML-Modells KI/ML2 parallel zur alten KI/ML-Komponente KI/ML1 deployt und betrieben und zwar derart, dass das neue KI/ML-Modell KI/ML2 auf der Zielplattform, ohne die bestehende Komponente, also das alte Modell KI/ML1, zu ersetzen und dass dabei die Eingangssignale und Impulse, die normalerweise an die alte Komponente KI/ML1 gesendet würden, auch an die neue Komponente, also das neue Modell KI/ML2, weitergeleitet werden, wobei die Ausgabesignale dieser neuen Komponente KI/ML2 bis zum Eintritt eines Triggerereignisses nicht an die Zielplattform weitergeleitet werden. Dieses Parallelbetreiben wird im Rahmen dieser Offenbarung auch als "Shadow Modus" bezeichnet.

In diesem Shadow Modus kann das zweite KI/ML-Modell KI/ML2 also getestet werden. Alternativ oder ergänzend wird das Modell bereits vor dem parallelen Deployment einem Testverfahren unterworfen. Dies ist insbesondere von Vorteil, um bereits den einwandfreien Betrieb des neuen Modells KI/ML2 auf der Zielplattform zu gewährleisten, also die grundsätzliche Funktionalität der Implementierung festzustellen, so dass der parallele Lauf sich im Wesentlichen auf die Güte der Vorhersage fokussieren kann.

Alternativ oder ergänzen können im Vorfeld aber auch Vorhersagen einem Test unterzogen werden. Beispielsweise um so genannte Edge/Corner Fälle in dieser, eher der Entwicklungsphase zuzuordnenden, Testphase einem Test unterworfen zu haben, bevor die parallele Implementierung in den Shadow Modus erfolgt.

Dies kann das Scharfschalten des neuen Modells KI/ML2 beschleunigen bzw. vermeidet, dass das neue Modell KI/ML2 aufgrund des Auftretens von Edge und Corner Cases Problematiken gar nicht erst scharfgeschalten werden kann.

Dem ersten Schritt S1 folgt ein zweiter Schritt S2 in dem ein Vergleich der ersten Ausgabesignale, der darauf basierenden Vorhersage und/oder der hieraus folgenden Erkennung mit den zweiten Ausgabesignale, der hierauf basierenden Vorhersage und/oder der hieraus folgenden Vorhersage durchgeführt wird.

Dies erfolgt gemäß vorteilhafter Ausgestaltung für eine bestimmte Zeitdauer. Die Länge dieser Zeit kann als Weiterbildung einstellbar sein. Alternativ oder ergänzend kann diese Zeit auch vorgegeben sein. Eine vorteilhafte Weiterbildung besteht darin, dass es sich um einen Zeitraum handelt, in dem mit einer hinreichend großen Wahrscheinlichkeit sichergestellt werden kann, dass alle Arten von möglichen Vorhersagen des ersten Modells KI/ML1 aufgetreten sind, d.h. insbesondere alle Arten von Hindernissen vorhergesagt und/oder tatsächlich gegeben waren.

Alternativ oder ergänzend kann die Zeitdauer bei Erreichen dieser Bedingung abgebrochen werden und/oder die Zeitdauer grundsätzlich unendlich sein, bis diese und/oder andere Abbruchbedingungen, beispielsweise ein Erkennen eines, insbesondere manuell, erzeugten Abbruchssignals, erreicht sind.

In einem dritten Schritt S3, der nach der Zeitdauer und/oder bereits parallel zum zweiten Schritt S2 läuft, kann eine Prüfung erfolgen, ob die Vorhersagen der beiden Modelle KI/ML1...2 in der Zeitdauer mindestens dieselben "true positives", also zutreffende Prädiktion (Vorhersage) von Hindernissen aufweisen; das also die Menge der true positives, die das erste Modell KI/ML1 vorhersagt eine Teilmenge der Menge der true positives ist, die das zweite Modell KI/ML2 vorhersagt. Mengenbeziehungen wie diese werden im Folgenden teilweise vereinfachend durch die Formulierung "Anzahl der Vorhersagen" in Verbindung mit "größer", "kleiner" und/oder "" beschrieben, so dass wenn diese Formulierung im Zusammenhang mit einem Vergleich der Vorhersagen des neuen Modells KI/ML1 mit den Vorhersagen des alten Modells KI/ML2 gebraucht wird, es beschreibt, wie sich die Anzahl der übereinstimmenden Vorhersagen verhält.

Wenn also die Prüfung ergibt, dass die Menge true positives des zweiten Modells KI/ML2 mindestens alle true positives des ersten Modells KI/ML1 umfasst, dann wird gemäß dem Ausführungsbeispiel das zweite Modell KI/ML2 scharfgeschaltet und befindet sich dann in einem zweiten Zustand Z2 "Modell freigeschaltet". Dies ist bei dem erfindungsgemäßen Ausführungsbeispiel damit begründet und vor allem dadurch von Vorteil, da das das zweite Modell KI/ML2 enthaltende Update in der Regel auch Verbesserung in der Performance bei der Ausführung aufweist, insbesondere Laufzeiten, Ressourcennutzung, Codeoptimierungen und/oder weitere die Performance beeinflussende Parameter, mit sich bringt und gemeinsam mit dem Prüfungsergebnis also sichergestellt ist, dass mindestens die Trefferquote für korrekt erkannte Hindernisse des alten Modells KI/ML1 erhalten bleibt bei gleichzeitig gegebener Performanceverbesserung. Somit könnte durch das Scharfschalten in Abhängigkeit dieses Ergebnisses eine zeitraubende Freigabeprozedur vermieden und dennoch die Hinderniserkennung verbessert betrieben werden.

Gemäß einer möglichen Weiterbildung kann diese Scharfschaltung unter der genannten Bedingung auch dann erfolgen, wenn die Menge der falsch positiven Vorhersagen, also vorausgesagte Hindernisse, die keine sind, beim neuen Modell KI/ML2 größer ist, als bei dem alten Modell KI/ML1, wenn die Hinderniserkennung derart betrieben wird, dass die höchste Priorität der Sicherheit gewährleistet werden soll und somit falsch positive Vorhersagen in Kauf genommen werden. In so einem Fall würde, falls das neue Modell KI/ML2 mit seinen korrekten Vorhersagen eine Obermenge zu den korrekten Vorhersagen des ersten Modells KI/ML1 bildet, insbesondere unabhängig von der Performance, scharfgeschalten werden, und bei gleicher Anzahl übereinstimmender korrekter Vorhersagen, würde die Performanceverbesserung das Scharfschalten trotz falsch positiver Vorhersagen zu einer positiven Scharfschaltungsentscheidung führen.

Die Wahrscheinlichkeit für so eine Scharfschaltung wird insbesondere durch die vorstehend beschriebene Testung der Performance sowie der Edge und Corner Fälle im Vorfeld gemäß Weiterbildung erhöht.

Das Ausführungsbeispiel des erfindungsgemäßen Verfahrens kann nun die Hinderniserkennung derart betreiben, dass in einem vierten Schritt S4 das neue Modell KI/ML2 unter Vorbehalt scharfgeschalten wird und dessen Vorhersagen für die Hinderniserkennung nutzen, während das erste Modell KI/ML1 stillgelegt und die von ihm belegten Ressourcen freigegeben werden können.

Denkbar ist, dass diese Freigabe gemäß einer Weiterbildung für eine, insbesondere festlegbare Zeit und/oder in bis zum Auftreten eines, insbesondere manuellen Triggerereignisses, gestundet wird, um eine Rückfallposition zu haben, falls sich nach dem Scharfschalten im vierten Schritt S4 Probleme beim Betrieb des neuen Modells zeigen.

Ergibt der Vergleich im dritten Schritt S3, dass weniger korrekt erkannte Objekte durch das neue Modell KI/ML2 vorhergesagt werden, als durch das alte Modell KI/ML1, kann nach einer Weiterbildung des erfindungsgemäßen Verfahrens vorgesehen sein, dass ein Bewertungsprozess durchgeführt wird, bei dem auch die Menge der falsch negativen Vorhersagen, also ein Nichterkennen tatsächlich vorhandener Hindernisse, durch das neue Modell KI/ML2 mit der Menge dieser falsch negativen Vorhersagen des alten Modells KI/ML1, die Menge korrekter negativer Vorhersagen der beiden Modelle KI/ML1...2, die Menge falsch positiver Vorhersagen der beiden Modelle KI/ML1...2 und/oder die Anzahl der korrekt positiven Vorhersagen einzeln oder in Kombination mit einem oder mehreren der genannten Vorhersagen, erfasst und die einzelnen Vorhersagen der jeweiligen Menge strukturiert abgespeichert werden, so dass alternativ oder ergänzend auf Grundlage dieser Daten bei Erreichen eines Entscheidungskriteriums, insbesondere einer Schwelle, zur Scharfschaltung des neuen Modells KI/ML2 führt.

Ferner können diese Daten bei einer alternativen oder ergänzenden Weiterbildung für ein Fine-Tuning/Training auf der Zielplattform und/oder einer separaten Weiterentwicklung zugeführt werden.

Gemäß einer Weiterbildung des erfindungsgemäßen Verfahrens kann der Bewertungsprozess bzw. das Entscheidungskriterium auf folgender Gewichtung/Bewertung der Vorhersagen berücksichtigen. Insbesondere können alternativ oder ergänzend diese Gewichtungen durch entsprechende Werte abgebildet und so eine Automatisierung der Bewertung durch Vergleich mittels Schwellwerten ermöglichen;

Grundsätzlich sind folgende im Verlauf der Zeitdauer Ergebnisse eines Vergleichs der Vorhersagen beider Modelle KI/ML1...2 denkbar;
a) Ergebnis neues und altes Modell ist funktional identisch
b) Neues Modell KI/ML2 findet mehr Objekte als das alte Modell KI/ML1 dann können folgende Wertungen gegeben sein
   ▪ Handelt es sich um falsch positive Vorhersagen, also zusätzliche, nichtvorhandene Objekte werden irrtümlich erkannt, die das alte Modell KI/ML1 nicht irrtümlich erkennt, führt das zur (Teil-)Wertung "Verschlechterung"
   ▪ Handelt es sich um korrekt positive Vorhersagen, also zusätzliche, vorhandene Objekte werden erkannt, die das alte Modell KI/ML1 nicht erkennt, führt das zur (Teil-)Wertung "Verbesserung"
c) Neues Modell KI/ML2 findet weniger Objekte als das alte Modell KI/ML1, dann können folgende Wertungen gegeben sein:
   ▪ Handelt es sich um falsch negative Vorhersagen, also vorhandene Objekte werden irrtümlich nicht erkannt, die das alte Modell korrekt erkennt, führt das zur (Teil-)Wertung "Verschlechterung"
   ▪ Handelt es sich um korrekt negative Vorhersagen, also nicht vorhandene Objekte werden korrekt nicht erkannt, die das alte Modell irrtümlich erkennt, führ das zur (Teil-)Wertung "Verbesserung"

Diese Wertungen können beispielsweise auch als Labels für eine Verbesserung des neuen Modells KI/ML2 im laufenden Betrieb und/oder einer von der Zielplattform getrennt betriebenen Entwicklungsumgebung zugeführt werden. Alternativ oder ergänzend können diesen Wertungen gemäß vorbestimmten Wichtungen Werte zugewiesen werden, so dass die Auswertung der Vorhersagen mittels einer Funktion über diese Werte zu einem Gesamtwert führen kann, der beispielsweise mittels Schwellwertvergleich zu einer automatischen Entscheidung über die Scharfschaltung führen bzw. zumindest beitragen kann. Alternativ oder ergänzend ist auch eine Darstellung der Endbewertung und/oder der Zwischenwertungen auf einer Anzeigevorrichtung denkbar, der, insbesondere nach Aufforderung, eine manuelle Scharfschaltung folgt.

Der Gewichtung im Rahmen der Wertung können gemäß einer erfindungsgemäßen Weiterbildung folgende Zusammenhänge zugrunde gelegt werden, insbesondere einem Kl-basierten Modell zur Wichtung zugeführt werden, um einen Wert für die Schwellwertentscheidung zu erhalten und/oder die Schwellwertentscheidung selbst vorzunehmen:
a) Verschlechterungen durch mehr falsch positive Vorhersagen führen zu unnötigen Ablenkungen des Zugführers oder zu unnötigen Bremsungen und stören somit den Betriebsablauf, aber sind im Grunde akzeptabel, wobei damit eine Verringerung der Verfügbarkeit einhergeht: Geringfügige Sicherheitsrelevanz und somit entsprechend niedrige negative Wichtung
b) Verschlechterungen durch mehr falsch negative Vorhersagen führen möglicherweise zu einem Sicherheitsrisiko, da eine mögliche Kollision nicht automatisch erkannt wird, sind somit nicht akzeptabel: Sicherheitsrelevant und daher entsprechend hohe positive Wichtung
c) Verbesserungen durch mehr korrekt positive Vorhersagen führen zu einer höheren Sicherheit, da das Ignorieren von einer höheren Anzahl korrekt positiver Vorhersagen im Grunde ein höheres Sicherheitsrisiko darstellt würde ein neues Modell in so einem Fall nicht scharfgeschalten werden: Es ist somit sicherheitsrelevant mit entsprechend hoher positiver Wichtung
d) Verbesserungen durch mehr korrekt negative Vorhersagen führen zu weniger unnötigen Störungen im Betriebsablauf und sind daher wünschenswert, da sie mit einer Verbesserung der Verfügbarkeit des Schienenfahrzeugs führen: Geringfügige Sicherheitsrelevanz und daher niedrige positive Wichtung

Bei dem in der Figur dargestellten Ausführungsbeispiel soll angenommen sein, dass diese Bewertung auch dann erfolgt, wenn das Ergebnis im dritten Schritt S3 zur Scharfschaltung geführt hat, so dass während das neue Modell KI/ML2 bereits für die Hinderniserkennung erfindungsgemäß betrieben wird, Daten und/oder Bewertungen im Rahmen des Bewertungsprozesses alternativ oder ergänzend zur Bewertung für eine Scharfschaltung für eine Verbesserung des neuen Modells KI/ML2 in situ und/oder nach Zuführung zu einer Entwicklungsplattform extern gesammelt und genutzt werden.

Daher setzt das Verfahren gemäß Ausführungsbeispiels in einem fünften Schritt S5 einen Marker, dass die Scharfschaltung erfolgt ist und die Bewertungsprozedur keine Scharfschaltungsentscheidung am Ende ihrer Erhebungen durchführt, sondern lediglich Daten-/Klassifizierungserhebungen sammelt und strukturiert speichert.

Wie in der Figur zu sehen ist, folgt auf diesen fünfte Schritt S5 oder nach einem negativen Ergebnis im dritten Schritt S3 der Bewertungsprozess.

Dieser führt zu einer Bewertung der Vorhersagen in Echtzeit und/oder im Nachgang.

Für eine Echtzeitbewertung gemäß Weiterbildungen des erfindungsgemäßen Verfahrens können einer oder mehrerer der folgenden Schritte im Rahmen des sechsten Schritts S6 durchgeführt werden:
- Dem Zugführer wird durch Ausgaben des Hinderniserkennungssystems aufgefordert zusätzliche positive Vorhersagen, also Hindernisvorhersagen, die korrekt sind, und ausbleibende negative Vorhersagen, also nicht erkannte Hindernisse, mit Labeln wie "false" oder "true" klassifizieren.
- Dies kann alternativ gewissermaßen vollautomatisch oder ergänzend auch durch eine KIgestütztes Klassifizierungsmodul geschehen, welches durch die betriebene Hinderniserkennung mit Ausgabesignalen versorgt wird.
- Die Klassifizierung kann auch dadurch automatisch erfolgen, dass der Zugführen nicht zur Bewertung aufgefordert wird, sondern durch systemseitige Auswertung der Zugsteuerung, die auf "schlüssiges Handeln" schließen lässt. Wenn beispielsweise ein unerwarteter Bremsvorgang eingeleitet wird, während das alte Modell kein Hindernis erkennt, ist ein zusätzlicher "true" (korrekte Hindernisvorhersage) Label anzunehmen, sonst ein "false" (falsche Hindernisvorhersage). Wenn ein erwarteter Bremsvorgang nicht eingeleitet wird, obwohl das alte Modell ein Hindernis erkennt, ist ein "true" Label (korrekte Vorhersage, dass kein Hindernis besteht) des neuen Modells anzunehmen. Dies ist vorteilhaft, da der Zugführer nicht während der Fahrt abgelenkt wird. Alternativ der ergänzend kann diese Weiterbildung auch derart ausgestaltet sein, dass der Zugführer und/oder das oben genannte KI-basierte Klassifizierungssystem zu einem späteren Zeitpunkt, also beispielsweise, wenn die mögliche Kollisionsgefahr vorüber ist, durch diese Label bestätigen oder korrigieren. Das hat den Vorteil, dass Szenarien, die missdeutet werden können, korrigiert werden. Beispielsweise kann es sein, dass Objekte nahe dem Gleis korrekt erkannt wurden, die aber keine Bremsung erforderten.
- Alternativ oder ergänzend kann der Bewertungsprozess derart weitergebildet sein, dass ein Abgleich mit weiteren Sensordaten durch Sensoren, die, insbesondere Ereignisgesteuert, beispielsweise, sobald der Zug sich dem Hindernis nähert, zugeschaltet werden. Sensoren könnten beispielsweise Vorrichtungen wie Lidar, Radar und/oder weitere zum Erfassen der Umgebung geeignete Sensoren sein.
- Alternativ oder ergänzend kann eine zusätzliche Komponente für die Bewertung im Zeitverlauf der Vorhersagen liegen, die die jeweiligen Modelle KI/ML1...2 im Vergleich treffen. Besteht eine Differenz der Ausgaben des alten und neuen Modells in einem Zeitintervall I1 gefolgt von einem Zeitintervall I2 in dem die Ausgaben übereinstimmen, so liegt es nahe, dass eines der Modellversionen das (vermeintliche oder tatsächliche) Objekt bereits früher erkannt haben (korrekt oder irrtümlich). Damit kann unter anderem folgende beispielhafte Situation vorteilhaft behandelt werden: Es sei angenommen, dass die Ausgaben der Modellversionen sich zu einem Zeitpunkt t1 unterscheiden, an dem der Zug beispielsweise 500m von einem vermeintlichen Hindernis entfernt ist, sich aber zu einem späteren Zeitpunkt t2, an dem der Zug nur noch 300m entfernt ist, einig sind und dies auch ab diesem Zeitpunkt bleiben, dann hat eines der Versionen das Hindernis früher erkannt. Oder angenommen eines der Modelle hat halluziniert und fälschlicherweise ein Hindernis erkannt, als die Distanz noch größer war aber sind sich beide später einig, dass es doch keines gab, dann wird das auch durch diese Weiterbildung behandelt, so dass wenn das neue Modell, das ist das früher ein Hindernis erkannt hat, oder das welches nicht irrtümlich ein Hindernis erkannt hat, als jenes festgestellt wird, das besser als das alte ist.

Für eine Bewertung im Nachgang gemäß Weiterbildungen des erfindungsgemäßen Verfahrens können alternativ oder ergänzend zur Echtzeitbewertung einer oder mehrerer der folgenden Schritte im Rahmen des sechsten Schritts S6 durchgeführt werden:
Aufzeichnungen von Kamera-Streams, von am Zug montierten Kameras und/oder anderer Sensoren, sowie der abweichenden Objektlisten der beiden Modelle werden zu einem späteren Zeitpunkt als Analyseaufforderung für den Zugführer und/oder der Kl-basierten Klassifizierung bereitgestellt. Um Ressourcen wie Speicher zu schonen, können diese Aufzeichnungen alternativ oder ergänzend, zumindest auf Zeiträume begrenzt erfolgen, in denen die Objektlisten abweichen.

Nach Abschluss des Bewertungsprozesses im sechsten Schritt S6 kann gemäß dem Ausführungsbeispiel des erfindungsgemäßen Verfahrens in einem siebten Schritt S7 geprüft werden, ob der Marker gemäß dem fünften Schritt S5 gesetzt wurde oder nicht. D.h. ob die Scharfschaltung schon erfolgt ist und die Bewertungsprozedur dem Training und der Verbesserung des neuen Modells KI/ML2 dient oder ob die Bewertungsprozedur als Grundlage für Scharfschaltung ermittelt wurde.

Ergibt diese Prüfung, dass der Marker gesetzt war, dann werden die Bewertungsdaten dem Training des neuen Modells KI/ML2 auf dem Zug zur Verfügung gestellt bzw. dieses Training durchgeführt und/oder die Daten der Entwicklungsplattform zugeführt, damit es als Grundlage für zukünftige Updates des Modells genutzt werden kann. Dies wird durch den Pfeil vom Zug zu einer externen Datenbasis DB schematisch vereinfacht dargestellt.

Ist der Marker nicht gesetzt, erfolgt in einem achten Schritt S8 eine Abfrage, ob die Gütegewichtung GW den Schwellwert SW zum Scharfschalten überschritten hat.

Neben den oben bereits genannten Wichtungsgrundlagen, kann dazu alternativ oder ergänzend die Gütegewichtung des neuen Modells KI/ML2 wie folgt bestimmt werden:
a) Gibt es zusätzliche korrekte Hindernisvorhersagen, aber keine zusätzlichen falsch Vorhersagen zu nicht vorhandenen Hindernissen, ist das neue Modell KI/ML2 sicherer und sollte scharfgeschalten werden. Wenn jedoch so viele zusätzlichen falsche Hindernisvorhersagen vorliegen, dass es sein kann, dass der Zugführer zu oft abgelenkt werden könnte, oder das Fahrassistenzsystem ignoriert, erfolgt eine Wichtung so, dass das Modell eher nicht praktisch eingesetzt werden kann, was gegen einen Rollout bzw. das Scharfschalten spricht.
b) Gibt es zusätzliche falsche Vorhersagen zu nicht vorhandenen Hindernissen gegenüber dem alten Modell KI/ML1 ist das neue Modell KI/ML2 abzulehnen, es sei denn, die zusätzlichen korrekten Vorhersagen von Hindernissen sind zahlenmäßig mehr als die des alten Modells KI/ML1
c) Alternativ oder ergänzend kann durch ein, Kl-basiertes oder menschliches, durch eine Aufforderung des Systems initiiertes, Audit, die Gewichtung verfeinert werden und dabei berücksichtigen, ob sich die falschen nicht vorhergesagten Hindernisse auf unkritische Objekte bezogen hatten, während die korrekt positiven Vorhersagen, sich auf kritischere Objekte bezogen, was für eine Gewichtung spricht, die ein Scharfschalten/ein Rollout erlaubt.

Gibt es keine sicherheitsrelevanten Verbesserungen durch korrekt positive Vorhersagen und keine sicherheitsrelevanten Verschlechterungen durch falsche nicht vorhergesagte Hindernisse, dann erfolgt eine Gewichtung für ein Rollout/ein Scharfschalten, ob das neue Modell KI/ML2 insgesamt zu weniger Betriebsstörungen führt, also, ob mehr korrekt nicht vorhergesagte Hindernisse, als falsch positive Hindernisvorhersagen gegenüber dem alten Modell KI/ML1 vorliegen.

Ergibt die Wichtung ein Scharfschalten, wird in dem achten Schritt S8 entschieden, dass ein Scharfschalten erfolgen soll und dies wird auf dem Zug dann auch getan.

Ist der Schwellwert SW nicht überschritten, bedeutet dies, dass der Rollout des neuen Modells KI/ML2 abzulehnen und zu verbessern ist, beispielsweise auf Grundlage der während des Bewertungsprozesses gesammelten Daten. Dies ist durch den Pfeil zur Datenbasis DB vereinfacht dargestellt.

Liegt ein verbessertes Modell vor, kann dies wieder beginnend mit dem ersten Zustand Z1 in erfindungsgemäßer Art auf dem Zug installiert und die Schritte S1 bis S8 wiederholt werden. Dies ist zum einen durch den Pfeil von der Datenbasis DB zum ersten Zustand Z1 und zum anderen durch den Pfeil vom zweiten Zustand Z2 zum ersten Zustand Z1 symbolisiert, da dies in der Regel aus einem freigeschalteten Modell heraus erfolgen wird

Das erfindungsgemäße Verfahren, insbesondere die beschriebenen Ausführungsbeispiele und Weiterbildungen erzielen dabei unter anderem Vorteile:
- Beschleunigtes Deployment
- Kürzere Zeit, um neue AI/ML Modelle in Betrieb zu setzen
- Neues Modell wird kontinuierlich getestet
- Test erfolgt auf der Hardware unter realistischen Bedingungen (vgl. Abnahmetest)
- Zulassung durch sog. Proven-in-use Argument möglich

Verfahren hilft kritische/schwere Szenarien im Feld zu erkennen, in denen Modelle häufig abweichen und somit Trainings- und Testdaten zu gewinnen.

Die Erfindung ist nicht auf die beschriebenen Ausführungsbeispiele und Weiterbildungen beschränkt. Vielmehr umfasst die Erfindung alle durch die Ansprüche definierten und durch deren Schutzumfang beschränkten Kombinationen.

Beispielsweise ist auch denkbar, dass das genannte Nachtrainieren auf dem Zug für bestimmte im Feld festgestellte Szenarien oder Kombination mit anderen Modellen, beispielsweise als Ensemble, erfolgt.

*Unabhängig vom grammatikalischen Geschlecht eines bestimmten Begriffes sind Personen mit männlicher, weiblicher oder anderer Geschlechteridentität mit umfasst.*

## Patentansprüche

1. Verfahren zum Betreiben einer KI/ML-basierten Hinderniserkennung eines Fahrzeugs, insbesondere Kraft- oder Schienenfahrzeugs, bei dem die Hinderniserkennung des Fahrzeug derart betrieben wird, dass sie Hindernisse aufgrund zumindest eines ersten Ausgangssignals basierend auf zumindest einem auf dem Fahrzeug betriebenen ersten KI/ML-Modell vorhersagt und für einen Betrieb des Fahrzeugs berücksichtigt wird, wobei durch das erste KI/ML-Modell aufgrund von zumindest einem Eingangssignal das erste Ausgangssignal erzeugt wird, das Grundlage für die erste Vorhersage bildet, **dadurch gekennzeichnet, dass**
a) auf dem Fahrzeug zumindest ein zweites KI/ML-Modell derart parallel zum ersten KI/ML-Modell installiert und betrieben wird, dass ihm das Eingangssignal zugeführt wird und es zumindest ein zweites Ausgangssignal basierend auf dem zweiten KI/ML-Modell erzeugt, das Grundlage für eine zweite Vorhersage ist, die durch die Hinderniserkennung derart verarbeitet wird, dass es für den Betrieb des Fahrzeugs unberücksichtigt bleibt,
b) zumindest bis zum Erreichen einer Abbruchbedingung, ein Vergleich mit zumindest einem Teil der ersten Vorhersagen und mit zumindest einem Teil der zweite Vorhersagen erfolgt,
c) eine Erfassung der ersten und oder zweiten Vorhersage derart erfolgt, dass zumindest ein Freigabekriterium ermittelbar ist,
d) bei Vorlage der Abbruchbedingung die Überprüfung des Freigabekriteriums derart erfolgt, dass für den Fall, dass das Freigabekriterium erfüllt ist, die zweite Vorhersage für den Betrieb des Fahrzeugs zumindest temporär berücksichtigt wird und die erste Vorhersage zumindest temporär für den Betrieb des Fahrzeugs unberücksichtigt bleibt.

2. Verfahren nach dem vorhergehenden Anspruch, **dadurch gekennzeichnet, dass** zur Ermittlung des Freigabekriteriums das Vorhandensein und/oder Eigenschaften vorhergesagter Hindernisse des zweiten KI-Modells und das Vorhandensein und/oder Eigenschaften vorhergesagter Hindernisse des ersten KI-Modells verifiziert und eine quantitative und/oder qualitative erste Klassifizierung durchgeführt und strukturiert gespeichert wird.

3. Verfahren nach dem vorhergehenden Anspruch, **dadurch gekennzeichnet, dass** die erste Klassifizierung derart erfolgt, dass zumindest erste Vorhersagen und/oder zweite Vorhersagen ermittelt werden, die ein Hindernis vorhergesagt haben und die Verifikation, derart erfolgt, dass eine Diskriminierung durchgeführt wird, ob die Vorhersage korrekt war oder nicht, und/oder, dass eine ausbleibende Vorhersage korrekt war oder nicht.

4. Verfahren nach dem vorhergehenden Anspruch, **dadurch gekennzeichnet, dass** das Freigabekriterium als erfüllt gesetzt wird, wenn die Klassifizierung ergibt, dass zumindest die Anzahl von korrekten zweiten Vorhersagen gleich der Anzahl von korrekten ersten Vorhersagen ist, wobei für jede korrekte erste Vorhersage des Hindernisses die korrekte zweite Vorhersage zum gleichen Hindernis existiert.

5. Verfahren nach dem vorhergehenden Anspruch, **dadurch gekennzeichnet, dass** das Freigabekriterium als erfüllt gesetzt wird, wenn die Klassifizierung ergibt, dass zumindest die Menge der korrekten zweiten Vorhersagen größer oder gleich der Menge von korrekten ersten Vorhersagen ist und die Menge der korrekten zweiten Vorhersagen eine Obermenge der Menge von korrekten ersten Vorhersagen ist.

6. Verfahren nach dem vorhergehenden Anspruch, **dadurch gekennzeichnet, dass** das Freigabekriterium als erfüllt gilt, wenn die Klassifizierung ergibt, dass die Anzahl ausbleibender zweiter Vorhersagen größer oder gleich der Anzahl ausbleibender erster Vorhersagen ist.

7. Verfahren nach einem der vier vorhergehenden Ansprüche, **dadurch gekennzeichnet, dass** für erste Vorhersagen und/oder ausbleibende erste Vorhersagen, die sie von den zweiten Vorhersagen und/oder ausbleibenden zweiten Vorhersagen unterscheiden, eine zweite Klassifizierung durchgeführt wird.

8. Verfahren nach einem der vorhergehenden Ansprüche, **dadurch gekennzeichnet, dass** ein Klassifizierungsprozess zur Durchführung der zweiten Klassifizierung zur zweiten Vorhersage derart erfolgt, dass er aufgrund während Betriebsphasen des Schienenfahrzeugs erfasster mit dem Betrieb korrelierender Ereignisse erfolgt.

9. Verfahren nach einem der vorhergehenden Ansprüche, **dadurch gekennzeichnet, dass** sein Klassifizierungsprozess zur zweiten Vorhersage derart erfolgt, dass er nach Betriebsphasen des Fahrzeugs durchgeführt wird, wobei dies aufgrund von zumindest Teilen von strukturiert gespeicherter, während der Betriebsphasen, insbesondere zu diskreten Zeitpunkten, erfasster mit dem Betrieb korrelierender Ereignisse erfolgt.

10. Verfahren nach einem der beiden der vorhergehenden Ansprüche, **dadurch gekennzeichnet, dass** die Klassifizierung gestützt auf ein drittes Kl-Modell zur Hinderniserkennung durchgeführt wird, welches insbesondere auf eine Korrelation mit den im Betrieb auftretenden Ereignissen trainiert ist..

11. Verfahren nach einem der drei vorhergehenden Ansprüche, **dadurch gekennzeichnet, dass** für den Klassifizierungsprozess die zweite Klassifizierung durch Erfassung von Zugführerrückmeldungen durchgeführt wird.

12. Verfahren nach einem der Ansprüche 2 bis 5, **dadurch gekennzeichnet, dass** die Erfassung mit dem Betrieb korrelierender Ereignisse derart erfolgt, dass bei Annäherung an ein gemäß zweiter Vorhersage prognostiziertes Ort eines Hindernisses oder an ein tatsächliches Hindernis die Auswertung von zumindest einem, insbesondere auf Grundlage von ersten Sensoren, erfassten, Betriebsparameter, wie beispielsweise Einleitung einer Bremsung, Geschwindigkeitsparameter, wie beispielweise Verlangsamung, Beschleunigung oder Konstanthalten, und/oder von zweiten Sensoren, wie Lidar, Radar und vergleichbare Umgebungsbeobachtungseinrichtungen, erfassten Umgebungsparameter erfolgt.

13. Verfahren nach dem vorhergehenden Anspruch, dass für zumindest ein Teil der ersten Vorhersagen und zumindest einen Teil der zweiten Vorhersagen jeweils ein Zeitstempel zugeordnet und der Teil der ersten Vorhersagen und der Teil der zweiten Vorhersagen mit dem jeweiligen Zeitstempel derart strukturiert abgespeichert werden, dass erste und zweite Vorhersagen des gleichen Zeitstempels zum Vergleich auslesbar hinterlegt sind.

14. Verfahren nach einem der dem vorhergehenden Anspruch, **dadurch gekennzeichnet, dass** der erste Teil und der zweite Teil derart strukturiert abgespeichert werden, dass zugeordnet zu dem jeweiligen Zeitstempel, die, insbesondere von den ersten Sensoren erfassten, Betriebsparameter und die, insbesondere von den zweiten Sensoren erfassten, Umgebungsparameter, gemeinsam mit der ersten Vorhersage und/oder zweiten Vorhersage gemeinsam auslesbar hinterlegt ist.

15. Verfahren nach einem der Ansprüche 4 bis 8, **dadurch gekennzeichnet, dass** die zweiten Klassifizierung derart erfolgt, dass der Vergleich der ersten Vorhersage und der zweiten Vorhersage dem Fahrzeugführer und/oder dem Dritten Kl-Modell zeitlich, insbesondere kurz nach, Erfassen eines mit dem Betrieb korrelierender Ereignisses und/oder nach der Betriebsphase durch Auslesen der strukturierten Speicherung vorgelegt wird, die Rückmeldung des Fahrzeugführers und/oder des dritten Kl-Modells als zu diesem Vergleich zugehörige Klassifizierung strukturiert abgespeichert wird.

16. Anordnung zum Betreiben einer KI/ML-basierten Hinderniserkennung eines Fahrzeugs, insbesondere Kraft- oder Schienenfahrzeugs, gemäß dem Verfahren nach einem der vorhergehenden Ansprüche, **gekennzeichnet durch** Mittel zur Durchführung des Verfahrens nach einem der vorhergehenden Ansprüche.
